# FASCICULE DE BREVET EUROPEEN

(11) **EP 0 954 080 B1**
(45) Date de publication et mention de la délivrance du brevet: **02.07.2003**
(21) Numéro de dépôt: 99401020.5
(22) Date de dépôt: 26.04.1999
(51) Int. Cl.: H02H 3/08, H02H 1/00

(54) **Dispositif de détection de niveau de courant pour la protection d'un circuit contre les surintensités en courant alternatif**
Einrichtung zum Stromerfassung zum Wechselspannungsüberlastschutz
Device for detecting the current level for ac overcurrent protection

(30) Priorité: 28.04.1998 FR 9805296
(43) Date de publication de la demande: 03.11.1999
(73) Titulaire: LEGRAND, F-87000 Limoges (FR); LEGRAND SNC, F-87000 Limoges (FR)
(72) Inventeur: Leblanc, Didier, 87000 Limoges (FR)
(74) Mandataire: Santarelli

(56) Documents cités:
- DE-A- 1 538 286
- GB-A- 2 279 189

## Description

La présente invention concerne d'une manière générale la protection d'un quelconque circuit contre les surintensités du type de celles occasionnées par exemple par un court-circuit.

Elle vise plus particulièrement le cas où, au lieu de mettre en oeuvre, de manière classique, pour la protection à assurer, un quelconque fusible, qu'il est nécessaire de changer après chaque intervention, on procède à une lecture de courant, ou, plus précisément, à une détection de niveau de courant, pour une intervention appropriée sur le circuit à protéger dès que ce niveau de courant atteint un seuil déterminé.

De manière usuelle, les dispositifs de détection de niveau de courant proposés à cet effet mettent en oeuvre, d'une part, des moyens de résistance, qui sont à insérer sur le circuit à protéger, et qui interviennent à la manière d'un capteur, et, d'autre part, une cellule de détection branchée aux bornes de ces moyens de résistance.

En courant alternatif, deux solutions sont envisagées.

Selon une première de ces solutions, il n'est mis en oeuvre qu'une seule cellule de détection, et, pour ce faire, il est procédé à un redressement sans seuil.

Mais cette solution a pour inconvénient de nécessiter ensuite un traitement lourd et cher de l'information recueillie.

Selon une deuxième solution, il est mis en oeuvre deux cellules de détection, à raison d'une par alternance du courant, et, suivant un montage de type miroir, chacune de ces deux cellules de détection est branchée aux bornes de moyens de résistance spécifiques.

Le traitement à appliquer à l'information recueillie s'en trouve avantageusement simplifié.

En pratique, les deux cellules de détection mises en oeuvre sont semblables l'une à l'autre, et, pour leur branchement sur les moyens de résistance correspondants, elles comportent chacune deux entrées.

Pour la constitution des moyens de résistance, il est parfois possible de se satisfaire d'une résistance de valeur faible, et la dissipation thermique au sein de celle-ci reste alors avantageusement modérée.

Mais cela n'est pas toujours le cas, notamment lorsque la cellule de détection associée met en oeuvre un interrupteur contrôlé, par exemple un transistor, qu'il s'agit de déclencher en introduisant un potentiel suffisant dans son circuit de base.

Si, cependant, la puissance dans le circuit à protéger reste modérée, la dissipation thermique dans les moyens de résistance peut encore rester acceptable.

Il n'en est pas de même pour des puissances plus importantes, comme cela peut être le cas, par exemple, lorsque le circuit à protéger met en oeuvre des semi-conducteurs de puissance.

La présente invention a d'une manière générale pour objet une disposition permettant de diminuer de manière très simple et efficace la dissipation thermique dans un tel cas et conduisant en outre à d'autres avantages.

De manière plus précise, elle a pour objet un dispositif de détection de niveau de courant pour la protection d'un circuit contre les surintensités en courant alternatif, du genre comportant, d'une part, des moyens de résistance, qui sont à insérer sur le circuit à protéger, et, d'autre part, à raison d'une par alternance du courant, deux cellules de détection, qui, semblables l'une à l'autre, sont branchées aux bornes de ces moyens de résistance par deux entrées dites ci-après, par simple commodité, première entrée et deuxième entrée, et caractérisé d'une manière générale en ce que, par un montage croisé, les deux cellules de détection sont l'une et l'autre branchées aux bornes des mêmes moyens de résistance pour que ces derniers interviennent dans les deux sens du courant, sans un quelconque redressement, l'une de ces cellules de détection étant reliée à une première de ces bornes par sa première entrée et à la deuxième par sa deuxième entrée, tandis que l'autre de ces cellules de détection est reliée à la première de ces bornes par sa deuxième entrée et à la deuxième par sa première entrée.

Ainsi, tout en conservant aux moyens de résistance la valeur nécessaire pour assurer à chaque altemance la détection recherchée, il est avantageusement possible de les diviser globalement par deux.

La dissipation thermique s'en trouve réduite d'autant.

Corollairement, le coût et l'encombrement de l'ensemble sont également avantageusement moindres.

Un autre type de dispositif de protection contre les courts-circuits est décrit par la demande de brevet allemand 1 538 286. Le dispositif de protection décrit par ce document comporte deux cellules de mise en forme semblables l'une à l'autre et branchées par un montage croisé aux bornes de l'enroulement secondaire d'un transformateur d'intensité. L'enroulement primaire de ce transformateur d'intensité est à insérer sur le circuit à protéger. Entre les bornes de l'enroulement secondaire du transformateur, sont disposées, en parallèle : deux diodes Zener placées tête-bêche, qui servent à abaisser la surtension et deux diodes conventionnelles. Une ligne de point milieu est raccordée à la jonction entre les diodes conventionnelles. Une première résistance est disposée entre l'une des bornes de l'enroulement secondaire du transformateur et la ligne de point milieu, et donc disposée en parallèle à l'une des diodes conventionnelles. Une deuxième résistance est disposée entre la ligne de point milieu et l'autre borne de l'enroulement secondaire du transformateur d'intensité, et donc en parallèle à l'autre diode conventionnelle. En outre de la liaison aux deux bornes de l'enroulement secondaire du transformateur d'intensité, chaque cellule de mise en forme est reliée à la ligne de point milieu, notamment à travers une diode conventionnelle. Lorsque le courant circule dans l'enroulement secondaire dans un certain sens, il passe par l'une des résistances et par la diode conventionnelle disposée en parallèle de l'autre résistance. Lorsqu'une pointe de saturation se manifeste, à l'autre résistance après le passage par zéro, cela bloque un transistor prévu dans la cellule de mise en forme qui était en fonctionnement, ce qui termine l'impulsion rectangulaire émise par cette cellule de mise en forme.

Les caractéristiques et avantages de l'invention ressortiront d'ailleurs de la description qui va suivre, à titre d'exemple, en référence aux dessins schématiques annexés sur lesquels :
la figure 1 est un schéma d'un dispositif de détection de niveau de courant de l'art antérieur ;
la figure 2 est un schéma de même type pour un dispositif de détection de niveau de courant suivant l'invention ;
les figures 3 et 4 sont des schémas qui, l'un et l'autre analogues à celui de la figure 2, se rapportent chacun respectivement à une variante de réalisation du dispositif de détection de niveau de courant suivant l'invention.

Tel qu'illustré sur ces figures, il s'agit, globalement, d'assurer la protection contre les surintensités d'un quelconque circuit 10 comportant une charge 11 et alimenté en courant alternatif par une quelconque source 12.

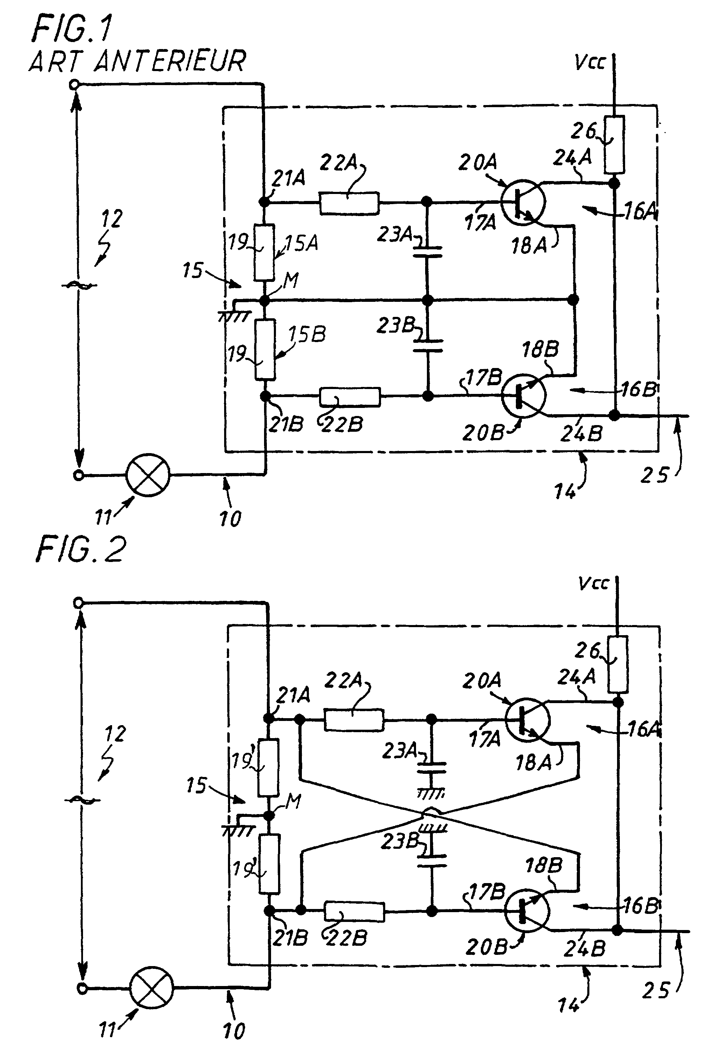

Suivant l'art antérieur, et tel que schématisé à la figure 1, il a été proposé, pour ce faire, de mettre en oeuvre un dispositif de détection de niveau de courant 14 comportant, d'une part, des moyens de résistance 15, subdivisés en l'espèce en moyens de résistance 15A et en moyens de résistance 15B, qui sont à insérer sur le circuit 10 à protéger, et, d'autre part, à raison d'une par alternance du courant, deux cellules de détection 16A, 16B, qui, semblables l'une à l'autre, sont branchées aux bornes de ces moyens de résistance 15 par deux entrées 17A-17B, 18A-18B, dites ici, par simple commodité, première entrée pour l'entrée 17A, 17B, et deuxième entrée pour l'entrée 18A, 18B.

Selon l'art antérieur, ce branchement se fait suivant un montage de type miroir, les moyens de résistance 15A étant affectés à la cellule de détection 16A, et les moyens de résistance 15B à la cellule de détection 16B.

En pratique, les moyens de résistance 15A sont constitués par une résistance 19 unique, il en est de même pour les moyens de résistance 15B, et les deux résistances 19 ainsi mises chacune respectivement en oeuvre pour les deux cellules de détection 16A, 16B ont une même valeur.

En pratique, également, le point milieu entre les moyens de résistance 15A, 15B, et, donc, entre les des deux résistances 19, est à la masse.

Les cellules de détection 16A, 16B étant semblables, leurs entrées 17A-17B, 18A-18B se correspondent chacune respectivement.

Autrement dit, la première entrée 17A, 17B est de même type pour l'une et l'autre des cellules de détection 16A, 16B, et il en est de même pour la deuxième entrée 18A, 18B.

Dans la forme de réalisation représentée, les deux cellules de détection 16A ont, en pratique, des constitutions identiques.

Par exemple, et tel que représenté, elles comportent chacune un interrupteur contrôlé 20A, 20B, en l'espèce un simple transistor, dont la base forme leur première entrée 17A, 17B, et dont l'émetteur forme leur deuxième entrée 18A, 18B.

Leur première entrée 17A, 17B et leur deuxième entrée 18A, 18B sont donc par nature de types différents dans ce cas.

Par sa première entrée 17A, la cellule de détection 16A est reliée à l'une des bornes 21A, 21B des moyens de résistance 15 formés par les moyens de résistance 15A, 15B, en l'espèce leur borne 21A, et, par sa deuxième entrée 18A, elle est reliée au point milieu M des moyens de résistance 15A, 15B.

Conjointement, et suivant des dispositions semblables, la cellule de détection 16B est reliée, par sa première entrée 17B, à l'autre des bornes 21A, 21B des moyens de résistance 15, en l'espèce leur borne 21B, et, par sa deuxième entrée 18B, elle est reliée au point milieu M des moyens de résistance 15A, 15B formant ces moyens de résistance 15.

En pratique, sur le circuit de base de l'interrupteur contrôlé 20A, 20B des cellules de détection 16A, 16B interviennent, d'une part, une résistance 22A, 22B, pour une limitation appropriée du courant, et, d'autre part, pour éliminer d'éventuels parasites, un condensateur 23A, 23B, formant filtre, dont l'autre borne est à la masse par le point milieu M des moyens de résistance 15A, 15B.

Le collecteur 24A de l'interrupteur contrôlé 20A de la cellule de détection 16A et celui 24B de l'interrupteur contrôlé 20B de la cellule de détection 16B interviennent, par ailleurs, en parallèle, sur un circuit de sortie 25, sur lequel intervient, également, par l'intermédiaire d'une résistance de limitation de courant 26, une source de courant continu V_{CC} appropriée.

Au cours d'une des alternances du courant dans le circuit 10, c'est la cellule de détection 16A qui intervient, tandis que, au cours de l'alternance suivante, c'est la cellule de détection 16B qui, à son tour, intervient, et ainsi de suite à chacune des périodes de ce courant.

Les interrupteurs contrôlés 20A, 20B sont normalement bloqués.

Si, cependant, au cours d'une alternance, le circuit 10 est l'objet d'une surintensité, l'interrupteur contrôlé 20A, 20B de la cellule de détection 16A, 16B alors concernée devient passant, et, suivant des modalités qui, ne relevant pas de la présente invention, ne seront pas décrites ici, le circuit de sortie 25 agit en conséquence sur ce circuit 10.

Suivant l'invention, les deux cellules de détection 16A, 16B sont, par un montage croisé, l'une et l'autre branchées aux bornes des mêmes moyens de résistance 15, et elles ont donc en commun ces moyens de résistance 15.

Soit, comme précédemment, 21A, 21B les bornes de ces moyens de résistance 15.

Suivant l'invention, l'une des cellules de détection 16A, 16B, par exemple la cellule de détection 16A, est reliée à la première de ces bornes 21A, 21B, en l'espèce la borne 21A, par sa première entrée 17A, et à la deuxième, en l'espèce la borne 21B, par sa deuxième entrée 18A, tandis que l'autre de ces cellules de détection 16A, 16B, et, donc, la cellule de détection 16B, est reliée à la première borne 21A par sa deuxième entrée 18B et à la deuxième, en l'espèce la borne 21 B, par sa première entrée 17B.

Dans la forme de réalisation représentée sur la figure 2, les moyens de résistance 15 comportent, en série, deux résistances 19' de même valeur.

Mais, ainsi qu'il est aisé de le comprendre, ces résistances 19' peuvent avantageusement avoir une valeur moitié par rapport à celle des résistances 19 précédentes.

Par exemple, et tel que représenté sur la figure 2, le point milieu M des deux résistances 19' est, comme précédemment, à la masse, pour fournir une référence à l'émetteur des interrupteurs contrôlés 20A, 20B des cellules de détection 16A, 16B, c'est-à-dire à la deuxième entrée 18A, 18B de ces cellules de détection 16A, 16B.

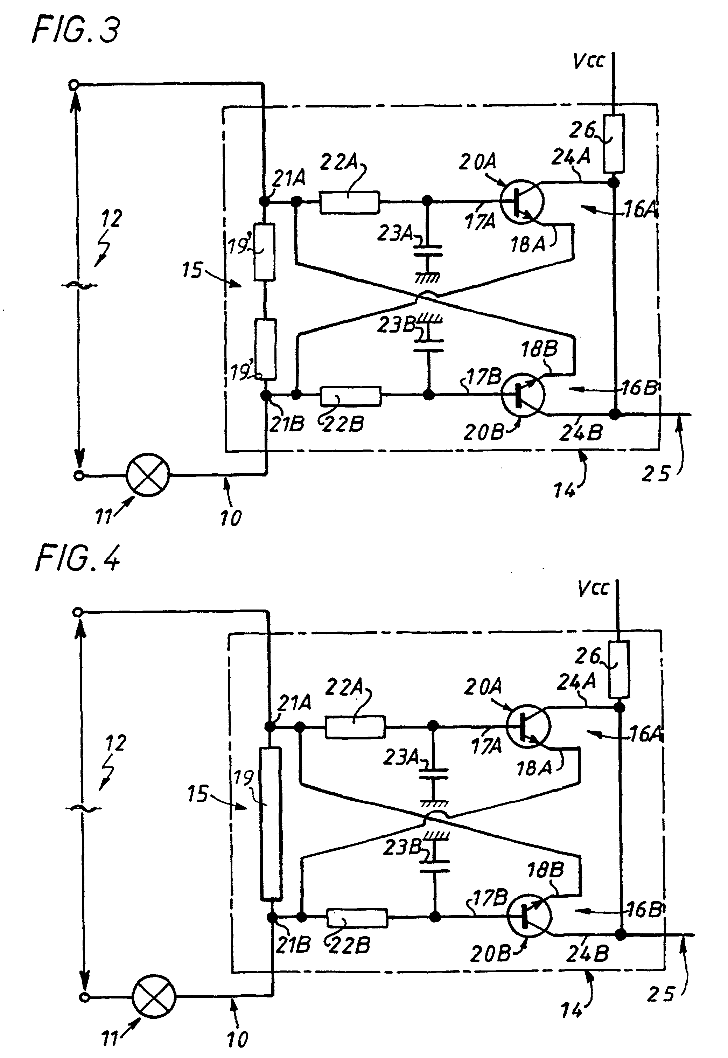

Mais en variante, figure 3, cette référence est supprimée et le montage de l'ensemble est en quelque sorte "flottant".

L'expérience, montre, en effet, que le fonctionnement reste convenable, quelles que soient les conditions de travail de la charge 11.

De ce fait, et tel que représenté à la figure 4, il est possible de remplacer les deux résistances 19' par une résistance 19 de même valeur que les résistances 19 précédentes.

Ainsi, dans cette forme de réalisation, les moyens de résistance 15 comportent une résistance 19 unique.

Pour le reste, les dispositions sont globalement du même type que celles décrites en référence à la figure 1.

En particulier, les deux cellules de détection 16A, 16B sont, comme précédemment, préférentiellement identiques l'une à l'autre, et elles comportent chacune un interrupteur contrôlé 20A, 20B, en l'espèce un simple transistor, dont la base forme leur première entrée 17A, 17B et dont l'émetteur forme leur deuxième entrée 18A, 18B.

Comme précédemment, également, sur le circuit de base de l'interrupteur contrôlé 20A, 20B de chacune des cellules de détection 16A, 16B interviennent, d'une part, une résistance 22A, 22B, et, d'autre part, un condensateur 23A, 23B dont l'autre borne est à la masse.

Comme précédemment, enfin, les collecteurs 24A, 24B de ces interrupteurs contrôlés 20A, 20B interviennent en parallèle sur un circuit de sortie 25.

Le fonctionnement reste, corollairement, inchangé.

Bien entendu, la présente invention ne se limite pas aux formes de réalisation décrites et représentées, mais englobe toute variante d'exécution.

## Revendications

1. Dispositif de détection de niveau de courant pour la protection d'un circuit contre les surintensités en courant alternatif, du genre comportant, d'une part, des moyens de résistance (15), qui sont à insérer sur le circuit (10) à protéger, et, d'autre part, à raison d'une par alternance du courant, deux cellules de détection (16A, 16B), qui, semblables l'une à l'autre, sont branchées aux bornes (21A, 21B) de ces moyens de résistance (15) par deux entrées (17A-18A, 17B-18B), dites ci-après, par simple commodité, première. entrée et deuxième entrée, **caractérisé en ce que**, par un montage croisé, les deux cellules de détection (16A, 16B) sont l'une et l'autre branchées aux bornes (21A, 21B) des mêmes moyens de résistance (15) pour que ces derniers (15) interviennent dans les deux sens du courant, sans un quelconque redressement, l'une de ces cellules de détection (16A) étant reliée à une première (21A) de ces bornes par sa première entrée (17A) et à la deuxième (21B) par sa deuxième entrée (18A), tandis que l'autre de ces cellules de détection (16B) est reliée à la première (21A) de ces bornes par sa deuxième entrée (18B) et à la deuxième (21B) par sa première entrée (17B).

2. Dispositif de détection de niveau de courant suivant la revendication 1, **caractérisé en ce que** les moyens de résistance (15) comportent en série deux résistances (19') de même valeur.

3. Dispositif de détection de niveau de courant suivant la revendication 2, **caractérisé en ce que** le point milieu (M) des deux résistances (19') est à la masse.

4. Dispositif de détection de niveau de courant suivant la revendication 1, **caractérisé en ce que** les moyens de résistance (15) comportent une résistance (19) unique.

5. Dispositif de détection de niveau de courant suivant l'une quelconque des revendications 1 à 4, **caractérisé en ce que** les cellules de détection (16A, 16B) comportent chacune un interrupteur contrôlé (20A, 20B) dont la base forme leur première entrée (17A, 17B) et dont l'émetteur forme leur deuxième entrée (18A, 18B).

6. Dispositif de détection de niveau de courant suivant la revendication 5, **caractérisé en ce que**, sur le circuit de base de l'interrupteur contrôlé (20A, 20B) des cellules de détection (16A, 16B), intervient une résistance (22A, 22B).

7. Dispositif de détection de niveau de courant suivant l'une quelconque des revendications 5, 6, **caractérisé en ce que**, sur le circuit de base de l'interrupteur contrôlé (20A, 20B) des cellules de détection (16A, 16B), intervient un condensateur (23A, 23B) dont l'autre borne est à la masse.

8. Dispositif de détection de niveau de courant suivant l'une quelconque des revendications 5 à 7, **caractérisé en ce que** le collecteur (24A) de l'interrupteur contrôlé (20A) de la cellule de détection (16A) et celui (24B) de l'interrupteur contrôlé (20B) de la cellule de détection (16B) interviennent en parallèle sur un circuit de sortie (25) sur lequel intervient, également, une source de courant continu (V_{cc}).

## Claims

1. A current level detection device for the protection of a circuit from overcurrents of alternating current, of the kind comprising on the one hand resistance means (15) which are to be inserted on the circuit (10) to be protected and on the other hand on the basis of one per alternation of the current two detection cells (16A, 16B) which, being similar to each other, are connected to the terminals (21A, 21B) of said resistance means (15) by two inputs (17A-18A, 17B-18B) referred to hereinafter for convenience as the first input and the second input, **characterised in that** by a crossed configuration the two detection cells (16A, 16B) are both connected to the terminals (21A, 21b) of the same resistance means (15) so that the latter (15) are operative in the two directions of the current without any rectification, one of said detection cells (16A) being connected to a first (21A) of said terminals by its first input (17A) and the second (21B) by its second input (18A) while the other of said detection cells (16B) is connected to the first (21A) of said terminals by its second input (18B) and to the second (21B) by its first input (17B).

2. A current level detection device according to claim 1 **characterised in that** the resistance means (15) comprise in series two resistors (19') of the same value.

3. A current level detection device according to claim 2 **characterised in that** the centre point (M) of the two resistors (19') is connected to earth.

4. A current level detection device according to claim 1 **characterised in that** the resistance means (15) comprise a sole resistor (19).

5. A current level detection device according to any one of claims 1 to 4 **characterised in that** the detection cells (16A, 16B) each comprise a controlled switch (20A, 20B) whose base forms their first input (17A, 17B) and whose emitter forms their second input (18A, 18B).

6. A current level detection device according to claim 5 **characterised in that** a resistor (22A, 22B) is operatively disposed on the base circuit of the controlled switch (20A, 20B) of the detection cells (16A, 16B).

7. A current level detection device according to either one of claims 5 and 6 **characterised in that** a capacitor (23A, 23B) is operatively disposed on the base circuit of the controlled switch (20A, 20B) of the detection cells (16A, 16B), the other terminal of the capacitor being connected to earth.

8. A current level detection device according to any one of claims 5 to 7 **characterised in that** the collector (24A) of the controlled switch (20A) of the detection cell (16A) and that (24B) of the controlled switch (20B) of the detection cell (16B) are disposed in parallel on an output circuit (25) on which a dc source (V_{cc}) is also operatively disposed.

## Patentansprüche

1. Vorrichtung zur Strompegelerfassung zum Schutz einer Schaltung gegen Wechselstromüberströme, umfassend einerseits Widerstandsmittel (15), die in die zu schützende Schaltung (10) einzusetzen sind, und andererseits zwei Erfassungszellen (16A, 16B), und zwar eine pro Halbwelle des Stroms, die einander ähnlich sind und an die Anschlüsse (21A, 21B) der Widerstandsmittel (15) über zwei Eingänge (17A-18A, 17B-18B) angeschlossen sind, die der Einfachheit halber im Nachstehenden erster Eingang und zweiter Eingang genannt werden, **dadurch gekennzeichnet, daß** die beiden Erfassungszellen (16A, 16B) beide durch eine gekreuzte Schaltung an die Anschlüsse (21A, 21B) derselben Widerstandsmittel (15) angeschlossen sind, damit diese (13) in beiden Richtungen des Stroms arbeiten, und zwar ohne irgendeine Gleichrichtung, wobei die eine dieser Erfassungszellen (16A) mit einem ersten (21A) dieser Anschlüsse über ihren ersten Eingang (17A) und mit dem zweiten (21B) über ihren zweiten Eingang (18A) verbunden ist, während die andere dieser Erfassungszellen (16B) mit dem ersten (21A) dieser Anschlüsse über ihren zweiten Eingang (18B) und mit dem zweiten (21B) über ihren ersten Eingang (17B) verbunden ist.

2. Vorrichtung zur Strompegelerfassung nach Anspruch 1, **dadurch gekennzeichnet, daß** die Widerstandsmittel (15) in Reihe zwei Widerstände (19') mit dem gleichen Wert aufweisen.

3. Vorrichtung zur Strompegelerfassung nach Anspruch 2, **dadurch gekennzeichnet, daß** der Mittelpunkt (M) der beiden Widerstände (19') an der Masse liegt.

4. Vorrichtung zur Strompegelerfassung nach Anspruch 1, **dadurch gekennzeichnet, daß** die Widerstandsmittel (15) einen einzigen Widerstand (19) aufweisen.

5. Vorrichtung zur Strompegelerfassung nach einem der Ansprüche 1 bis 4, **dadurch gekennzeichnet, daß** die Erfassungszellen (16A, 16B) jeweils einen gesteuerten Schalter (20A, 20B) aufweisen, dessen Basis ihren ersten Eingang (17A, 17B) und dessen Emitter ihren zweiten Eingang (18A, 18B) bilden.

6. Vorrichtung zur Strompegelerfassung nach Anspruch 5, **dadurch gekennzeichnet, daß** in dem Basiskreis des gesteuerten Schalters (20A, 20B) der Erfassungszellen (16A, 16B) ein Widerstand (22A, 22B) vorgesehen ist.

7. Vorrichtung zur Strompegelerfassung nach einem der Ansprüche 5, 6, **dadurch gekennzeichnet, daß** in dem Basiskreis des gesteuerten Schalters (20A, 20B) der Erfassungszellen (16A, 16B) ein Kondensator (23A, 23B) vorgesehen ist, dessen anderer Anschluß an der Masse anliegt.

8. Vorrichtung zur Strompegelerfassung nach einem der Ansprüche 5 bis 7, **dadurch gekennzeichnet, daß** der Kollektor (24A) des gesteuerten Schalters (20A) der Erfassungszelle (16A) und derjenige (24B) des gesteuerten Schalters (20B) der Erfassungszelle (16B) parallel an einem Ausgangskreis (25) anliegen, an dem auch eine Gleichstromquelle (Vcc) anliegt.
